Europäisches Patentamt

European Patent Office

Office européen des brevets

(11) Publication number: **0 145 140**
A1

# (12) EUROPEAN PATENT APPLICATION

(21) Application number: 84306267.0

(22) Date of filing: 13.09.84

(51) Int. Cl.⁴: **B 25 J 9/06**
**B 25 J 19/00, B 25 J 17/00**

(30) Priority: 07.10.83 US 539846

(43) Date of publication of application:
19.06.85 Bulletin 85/25

(84) Designated Contracting States:
DE FR GB

(71) Applicant: NORDSON CORPORATION
555 Jackson Street P. O. Box 151
Amherst Ohio 44001(US)

(72) Inventor: Wacker, Robert L.
125 Pleasant Street
Wellington Ohio 44090(US)

(74) Representative: Allen, Oliver John Richard et al,
Lloyd Wise, Tregear & Co. Norman House 105-109 Strand
London, WC2R 0AE(GB)

(54) Simulator wrist assembly.

(57) A wrist assembly for a robot simulator, or training arm, which is mountable at the end of the arm and to which a tool such as a spray gun is attached. The wrist assembly has three degrees of freedom and is made up of three links, each of which comprises a link shaft rotatably received in a link body. The wrist assembly may be oriented, during its use with the simulator arm and the gun, such that the first link serves as a roll axis and the second and third links and the gun may be rotated upwardly about this roll axis to a position over, and even overcenter of, the first link body and the simulator arm. To return the gun from this overcenter position, a torsion spring surrounding the first link shaft is attached at a first end to the first link body and coupled at a second end to the first link shaft to produce an increasing opposing force as the wrist assembly is rotated about the roll axis above the overcenter of the first link.

./...

Croydon Printing Company Ltd.

FIGURE 1

1'

## Description of the Invention

This invention relates generally to a wrist assembly for a robot simulator and more particularly concerns such a wrist assembly which includes means for producing an increasing opposing force as the wrist assembly is rotated about a roll axis.

A work-performing robot, or manipulator, typically includes a plurality of links interconnected to provide relative motion with a plurality of degrees of freedom. The links are each provided with a signal-controlled actuator for powering the respective links, as well as a position transducer for providing a real-time signal correlated to the actual position of the robot link. In order to provide the actuator control signals, a sequence of command positions for each link is stored in a suitable memory device, and the command positions are periodically retrieved and compared against the actual link position signals provided by the link position transducers. In response to the comparisons, link positional error signals are generated for each of the links and then input to the various link actuators. Therefore, closed loop servo techniques are utilized to drive the various link actuators to move the links to the desired command positions.

There are many applications for work robots such as welding and the application of various coating materials. As

2'

an illustrative example, a work-performing robot may be used for spray painting. A program comprising sequences of command positions for the robot links is produced in order to effect the movement of the robot for the spraying of paint onto articles to be painted.

Production of the prerecorded motion sequence of command positions, known as robot training or teaching, can be accomplished in several ways. In one approach, a lightweight training robot, or simulator, is used which, except for the reduced mass of the training robot and the absence of actuators for the links, is identical in all respects to the considerably more massive work robot which is being programmed. To produce a program sequence for the work robot, the output element of the simulator, the spray gun, is grasped manually by the operator doing the programming and moved through a sequence of motions which it is desired to have the work robot subsequently execute. Since the training robot is lightweight, and the weight of the simulator arms typically counterbalanced, the training arm can be moved manually by the operator with little difficulty for most motions. As the simulator robot is moved through the desired sequence of motions, position transducers at the joints of its links produce electrical link position signals which are recorded for subsequent servo loop control of the work robot.

3'

A robot simulator typically has a number of articulated arms, with the outer end of the last arm carrying a wrist assembly having one or more rotational axes for the wrist pieces making up the wrist assembly. An appropriate tool is mounted to the wrist assembly, which for the present spray painting example is a spray gun.

When the simulator is oriented such that the outermost simulator arm and the gun are generally horizontal and directed at a workpiece, the gun and the wrist assembly are free to rotate about a roll axis substantially parallel with the simulator arm. In order to permit free movement of the gun during the training session, the gun and a significant portion of the wrist assembly are offset laterally from this roll axis.

Each of the arms of the simulator, including the outermost arm and the wrist assembly, are typically counterbalanced so that they are effectively "weightless". However, the weight of the gun is not counterbalanced. Therefore, there is a torque produced about the roll axis of the wrist due to the gravitational force exerted upon the gun. The amount of torque depends upon the weight of the gun, which may exceed five pounds for example, and the distance of the lateral offset of the gun from the outermost simulator arm.

Normally, the operator of the simulator is readily able to maneuver the gun through the various motions necessary to record a spray painting program. However, if the gun and wrist assembly are rotated upwardly about the roll axis and beyond an "overcenter" position, a "flop-over" effect is encountered. From a viewpoint in front of the gun and the simulator, with the gun offset to the right of the outermost, horizontally disposed, simulator arm, the "flop-over" effect is encountered when the gun and wrist assembly are rotated upwardly and to the left about the roll axis to a point where the gun has rotated through more than 90° and the gun and wrist assembly are moving to the left and downwardly after passing beyond a vertical plane through the roll axis.

Since the simulator arm is counterbalanced, it is urged to remain substantially stationary. Therefore, the gun must be moved by the operator both upwardly and to the right about the roll axis in order to move the gun and the wrist assembly out of the "overcenter" position. Due to the weight of the gun, and the moment arm produced by the offset of the gun from the roll axis, a considerable force must be applied by the operator in order to accomplish this movement of the gun. This in turn can adversely affect the production of a continuous and effective paint spraying program. In an extreme case, the operator must grasp the gun with both hands in order to move the gun out of this overcenter position.

The straightforward solution to the problem would be

0145140

to provide a counterbalance force about the roll axis for the gun. Implementing this solution, however, produces a number of unacceptable results. If a counterbalance weight or cylinder or the like is introduced onto the wrist assembly, the maneuverability of the gun about the workpiece is reduced. In addition, the counterbalancing weight or mechanism adds additional weight at the end of the simulator arm. Consequently, the strength of the arm must be increased, adding to the mass of the arm in order to obtain the necessary arm strength. Further simulator arm counterbalancing must then be introduced for the increased weight of the arm. The other arms of the simulator may also need to be increased in strength, and therefore in size and mass.

The end result of the above-mentioned counterbalance solution is that, in order to improve the maneuverability of the simulator and gun for the operator by alleviating the "flop-over" effect, maneuverability is, in fact, reduced due to added mass in the various simulator components. Consequently, after considering the conventional simulator counterbalancing techniques in looking for a solution to the wrist "flop-over" problem, it would generally be concluded that there is no satisfactory solution to the problem.

It is consequently the aim of the present invention to alleviate the above-described "flop-over" effect in the maneuvering of a simulator tool such as a spray gun. This objective has been accomplished in accordance with certain principles of the invention by introducing an increasing opposing force in a direction about the roll axis of a simulator wrist which increases as the wrist assembly and a tool mounted thereon are rotated about the roll axis toward and into an overcenter condition. In an illustrated form of the invention, the opposing force is produced by a torsion spring fixed at a first end relative to the actuator arm and coupled at its second end to the wrist member rotating about the roll axis.

The various advantages of the invention, and the manner of their implementation, will become apparent upon reading the following detailed description and upon reference to the drawings, in which:

Fig. 1 is a perspective view of a wrist assembly constructed in accordance with the present invention and showing a portion of an actuator arm to which the wrist assembly is attached and a spray gun mounted thereon;

Fig. 2 is a front view of the wrist assembly and gun of Fig. 1 showing the wrist in a reference position;

Fig. 3 is a front view similar to that of Fig. 2 in which the wrist assembly and gun are rotated to an overcenter position; and

Fig. 4 is an enlarged view, partially in section, of a portion of the wrist assembly.

While the invention is susceptible to various modifications and alternative forms, a specific embodiment thereof has been shown by way of example in the drawings and will herein be described in detail. It should be understood, however, that it is not intended to limit the invention to the particular form disclosed, but, on the contrary, the intention is to cover all modifications, equivalents, and alternatives falling within the spirit and scope of the invention as defined by the appended claims.

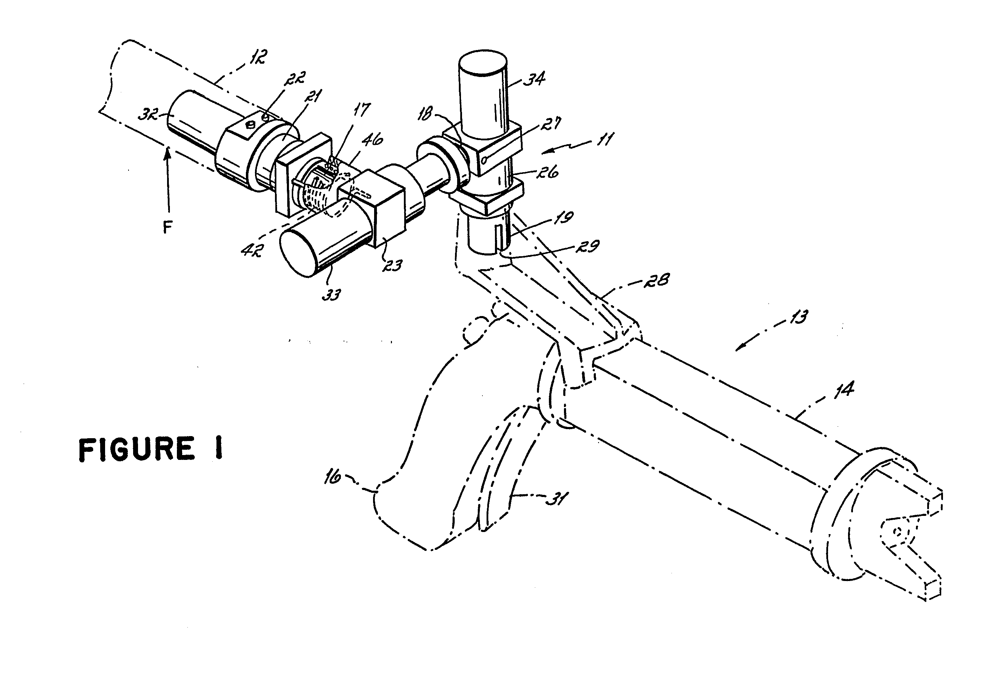

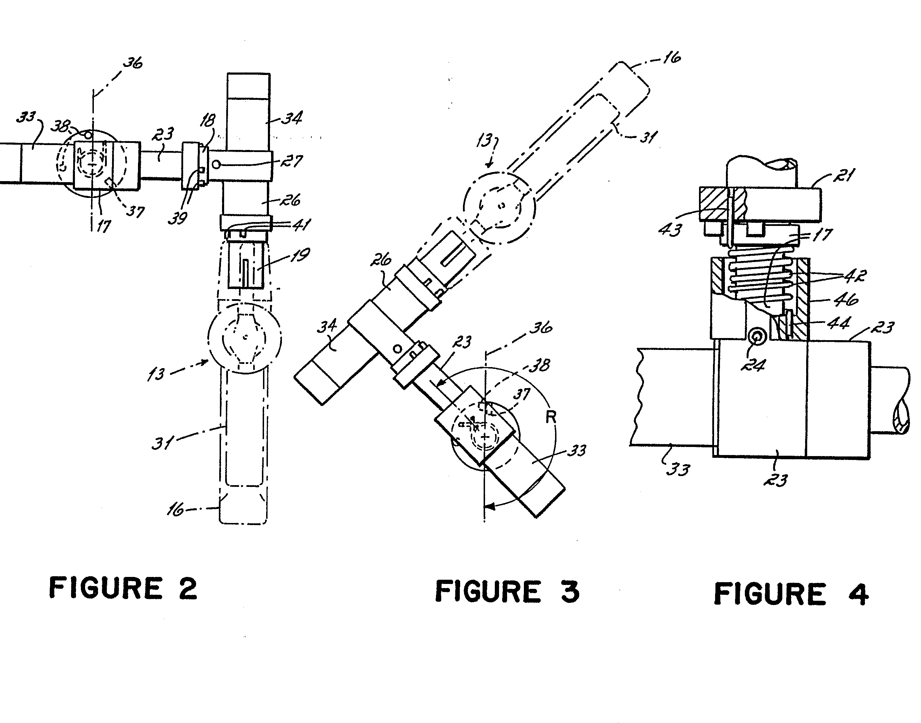

Turning now to the figures, a wrist assembly 11 is coupled between the end of a simulator arm 12 and a spray gun 13. The arm 12 and the gun 13 are shown in Figs. 1 and 2 in a reference, or "home", position wherein the arm and the barrel 14 of the gun are disposed in generally horizontal parallel planes and pointed in the same direction, such as in the direction of a workpiece to be spray painted. The arm 12 is counterbalanced by a counterbalancing force shown diagrammatically as F exerted in a substantially vertical direction. The counterbalance force serves to maintain the arm and wrist assembly in any given stationary position. The gun 13 may be maintained in the position of Figs. 1 and 2 by an operator grasping the handle 16 of the gun.

The wrist assembly 11 provides three orthogonal axes of rotation for the gun 13 relative to the arm 12, taking the form of three rotatable wrist link shafts 17, 18 and 19 received in three wrist link bodies. The first link shaft 17 is rotatably received and retained within a suitable bearing assembly within a first link body 21. The link body 21 is in turn rigidly attached to the end of the simulator arm 12 by screws 22. The second link shaft 18 is rotatably received and retained by a bearing assembly within a second link body 23, which is in turn rigidly attached to the shaft 17 by screws 24. The third link shaft 19 is rotatably received and retained within a bearing assembly in a third link body 26, which is rigidly attached to the shaft 18 by screws 27. The gun 13 includes a bracket 28 which is affixed to the third wrist link shaft 19, and oriented relative to the shaft by a keying slot 29 in the shaft.

In the reference orientation of the wrist assembly of Figs. 1 and 2, the first link shaft 17 is rotatable within the first link body 21 to provide a "roll" axis for the wrist. The second link shaft 18 is rotatable within the body 23 to produce a "pitch" axis, and the third link shaft 19 is rotatable within the body 26 to provide a "yaw" axis.

To produce a painting program, or command position sequence, for a painting manipulator, or work robot, the simulator operator grasps the gun 13 by the handle 16 and spray paints a workpiece in order to obtain a suitable paint coating on the workpiece. As the operator maneuvers the gun 13, the operator depresses the gun trigger 31 and moves the various axes of the simulator, including the three wrist assembly axes. The actuation and deactuation of the gun trigger 31 are recorded as part of a spray painting program in a memory device, as are sequences of positions for the various simulator axes.

The positions of the axes of the wrist assembly during the training session are sensed by three resolvers coupled to the three wrist links. A first resolver 32 has an outer housing attached to the link body 21 and a resolver shaft (not shown) attached to the link shaft 17. In like manner, a resolver 33 is mounted on the link body 23 and has a resolver shaft coupled to the link shaft 18; and a resolver 34 is mounted on the link body 26 and has a resolver shaft coupled to the link shaft 19. Each resolver output, indicative of the angular position of its associated link shaft relative to the link body, is coupled by suitable electrical conductors (not shown) to the program storage device.

In the course of manipulating the gun 13 to record a paint spraying program, the operator of the gun can rotate the gun 13 and the wrist assembly 11 about the roll axis comprising the link shaft 17. Ignoring rotation of the gun about the other wrist axes, the gun and wrist assembly may be rotated upwardly about the roll axis from the position illustrated in Fig. 2 to that of Fig. 3. After 90° of rotation about the roll axis, the link shaft 18 is substantially vertical, aligned with a vertical plane through the roll axis, this plane being indicated as 36 in Fig. 3. Further, counterclockwise, rotation (as viewed in Figs. 2 and 3) about the roll axis actually moves the gun and wrist assembly downwardly as well as to the left. The gun and wrist assembly may be rotated as far as, for example, 135° from the reference position of Fig. 2, through an arc indicated R in Fig. 3.

The extent of rotation about the roll axis of the gun and wrist assembly is limited by the engagement of a projection 37 mounted upon the shaft 17 with one of a pair of limit stops 38 on the link body 21 (Fig. 2). Similar limit stops 39, 41, engageable by suitable projections, are provided for the other axes.

Since the simulator arm 12 is substantially maintained in position by a counterbalance force, the gun 13 must be raised in order to rotate the gun in a clockwise direction to move the gun out of its overcenter position of Figure 3. As indicated earlier, the weight of the gun, combined with the somewhat awkward grip of the operator upon the gun when it is in this overcenter orientation, leads to a requirement for considerable effort on the part of the operator to rotate the gun about the roll axis out of the overcenter position.

In accordance with the invention, in order to facilitate the rotation of the gun 13 and the wrist assembly 11 about the roll axis from the overcenter position of Fig. 3, a torsion spring is provided which is coupled between the first link shaft 17 and the first link body 21. As best seen in Fig. 4, the torsion spring 42 has a first end retained in an opening in the link body 21. The other end 44 of the spring 42 is retained in an opening in the second link body 23, which is attached to the link shaft 17. The second link body 23 includes an extension sleeve portion 46 surrounding the spring 42 and including the aperture receiving the end 44 of the spring. The spring 42 is wound in a direction such that the torsional spring force opposing rotation of the wrist assembly and gun about the roll axis increases as the gun and wrist assembly are rotated in a counterclockwise direction (as viewed in Figs. 2 and 3), with the maximum force being applied when the gun and wrist are in the overcenter position of Fig. 3. Therefore, when the operator of the gun 13 rotates the gun and wrist in a clockwise direction to move the gun and wrist out of the overcenter position, a significant torsional spring force aids in effecting this movement of the gun and wrist.

As can be seen, the use of the torsion spring 42 as described enhances the maneuverability of the gun 13 in permitting freer manipulation of the gun into and out of the overcenter position of Fig. 3. As can also be seen, this is accomplished without the addition of any substantial weight to the wrist assembly or the simulator or gun, which would detract from maneuverability.

CLAIMS:

1.    A wrist assembly for a robot simulator comprising: means for mounting a first link on a simulator arm so that, when the arm is extended horizontally, the first link is rotatable relative to the arm about a roll axis; means for coupling a second link to the first link so that the second link extends in a direction transverse to the roll axis of the first link; means for mounting a tool on the second link, at a location spaced apart from the first link; and means for producing an increasing opposing force as the first link is rotated about the roll axis in a direction to move the second link over the first link.

2.    A wrist assembly as claimed in Claim 1, in which the means for coupling the second link to the first link comprises means for mounting the second link on the first link so that when the arm and the first link are in a substantially horizontal plane the second link is rotatable relative to the first link about a pitch axis.

3.    A wrist assembly as claimed in Claim 1 or 2, in which the means for mounting a tool on the second link comprises a third link releasably attachable to the tool and means for mounting the third link on the second link so that when the first and second links are in a substantially horizontal plane and the second and third links are in a substantially vertical plane
generally perpendicular to said horizontal plane, the
third link is rotatable relative to the second link
about a yaw axis.

4.      The wrist assembly as claimed in any of the
preceding Claims, in which the means for mounting a
tool on the second link comprises a third link
releasably attachable to the tool and means for
mounting the third link on the second link so that when
the first and second links are in a substantially
horizontal plane and the second and third links are in
a substantially vertical plane generally perpendicular
to said horizontal plane, the third link is rotatable
relative to the second link about a yaw axis.

5.      A wrist assembly for a robot simulator
comprising:

        a first link shaft;

        a first link body rotatably receiving the first
link shaft;

        means for mounting the first link body on a
simulator arm so that when the arm is extended
horizontally the first link shaft is rotatable relative
to the first link body about a roll axis;

        a second link shaft;

        a second link body attached to the first link
shaft and rotatably receiving the second link shaft,

14'

the second link shaft extending in a direction transverse to the roll axis of the first link;

means for mounting a tool on the second link, at a location spaced apart from the first link; and

a torsion spring disposed about the first link shaft and having a first end attached to the first link body and having a second end fixed relative to the first link shaft, so that as the first link shaft is rotated relative to the first link body about the roll axis in a direction to move the second link over the first link an increasing opposing force is produced by the torsion spring.

6. A wrist assembly as claimed in Claim 5, in which the means for mounting a tool on the second link comprises a third link body attached to the second link shaft and a third link shaft rotatably received in the third link body, a tool being attachable to the third link shaft.

7. The wrist assembly of Claim 5 or 6 in which the third link shaft is received in the third link body such that when the first and second link shafts are oriented in a horizontal plane, the second and third link shafts may be oriented in a substantially vertical plane, with the third link shaft rotatable relative to the second link shaft about a yaw axis.

FIGURE I

FIGURE 2　　FIGURE 3　　FIGURE 4

European Patent Office

**EUROPEAN SEARCH REPORT**

| | **DOCUMENTS CONSIDERED TO BE RELEVANT** | | EP 84306267.0 |
|---|---|---|---|

| Category | Citation of document with indication, where appropriate, of relevant passages | Relevant to claim | CLASSIFICATION OF THE APPLICATION (Int Cl.4) |
|---|---|---|---|
| A | EP - A1 - 0 037 704 (NORDSON) <br> * Fig. 1; claim 1 * <br> -- | 1,5 | B 25 J 9/06 <br> B 25 J 19/00 <br> B 25 J 17/00 |
| A | DE - A1 - 3 132 953 (DAIMLER-BENZ-AG) <br> * Totality * <br> -- | 1,5 | |
| A | DE - A1 - 3 303 497 (MITSUBISHI) <br> * Abstract; fig. 2 * <br> -- | | |
| A | DD - A - 154 282 (BAUDISCH) <br> ---- | | |

| | | | TECHNICAL FIELDS SEARCHED (Int. Cl.4) |
|---|---|---|---|
| | | | B 25 J 9/00 <br> B 25 J 17/00 <br> B 25 J 19/00 |

The present search report has been drawn up for all claims

| Place of search | Date of completion of the search | Examiner |
|---|---|---|
| VIENNA | 12-01-1985 | SCHMIDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82